# EUROPEAN PATENT APPLICATION

(11) **EP 4 817 451 A1**
(43) Date of publication of application: **07.10.2026**
(21) Application number: 26162985.1
(22) Date of filing: 06.03.2026
(51) Int. Cl.: A42B 1/00

(54) **HAT**

(30) Priority: 11.03.2025 JP 2025038666
(71) Applicant: Shigematsu Co., Ltd., Osaka-shi, Osaka 541-0059 (JP)
(72) Inventor: SHIGEMATSU, Yoshikatsu, Osaka 541-0059 (JP)
(74) Representative: Novagraaf International SA

(57) **Abstract**

A hat (100) in which a brim portion (30) is provided at the lower end of the front panel portion (10) of the crown. The front panel portion (10) of the crown of the hat (100) includes: an outer fabric (40) forming the outer face of the crown; an interlining (50) overlapping the outer fabric (40) on the inner face of the outer fabric (40); and a stretchable film (70) bonded to the inner face of the interlining (50).

## Description

### Field

The present disclosure relates to hats.

### Background

Patent Literature (PTL) 1 discloses a hat that includes a size adjustment mechanism, such as a sweatband, which can improve durability when washed.

### Citation List

### Patent Literature

**PTL 1:** Japanese Unexamined Patent Application Publication No. 2001-214322

### Summary

### Technical Problem

However, the hat disclosed in PTL 1 cannot prevent loss of shape when washed.

For example, a baseball cap includes a front interlining for supporting the shape of the baseball cap. The front interlining is a material serving as a core for reinforcing the fabric, and in a baseball cap, is provided at the front face of the crown. The front interlining also helps the front emblem stand out nicely.

However, the front interlining collapses when subjected to repeated hand washing, and has a problem of being unable to maintain the shape of the baseball cap long term.

The present disclosure has an object to provide a hat that inhibits loss of shape not only due to hand washing but also due to machine washing.

### Solution to Problem

A hat according to one aspect of the present disclosure is a hat in which a brim portion is provided at a lower end of a front panel portion of a crown. The front panel portion of the crown includes: an outer fabric forming an outer face of the crown; an interlining overlapping the outer fabric on an inner face of the outer fabric; and a film that is stretchable and bonded to the interlining over an entirety of an inner face of the interlining.

### Advantageous Effects

The present disclosure enables the realization of a hat that inhibits loss of shape not only due to hand washing but also due to machine washing.

### Brief Description of Drawings

These and other advantages and features will become apparent from the following description thereof taken in conjunction with the accompanying Drawings, by way of non-limiting examples of embodiments disclosed herein.
**[****FIG. 1****]**

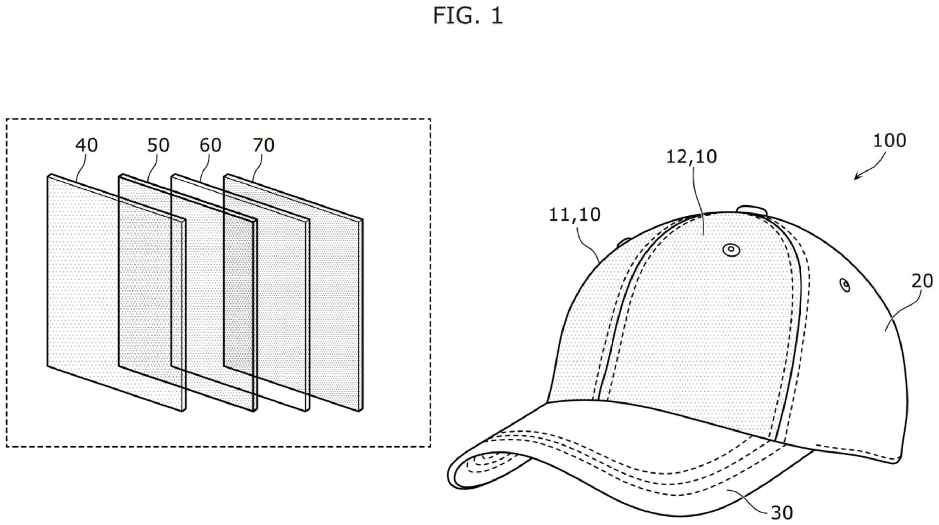

   FIG. 1 illustrates the structure of a hat according to an embodiment of the present disclosure.
**[****FIG. 2****]**

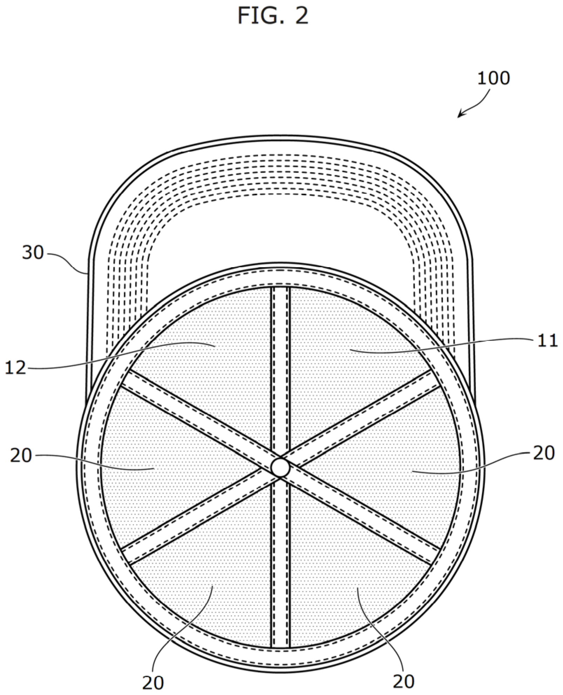

   FIG. 2 illustrates a bottom view of a hat according to an embodiment of the present disclosure.
**[****FIG. 3****]**

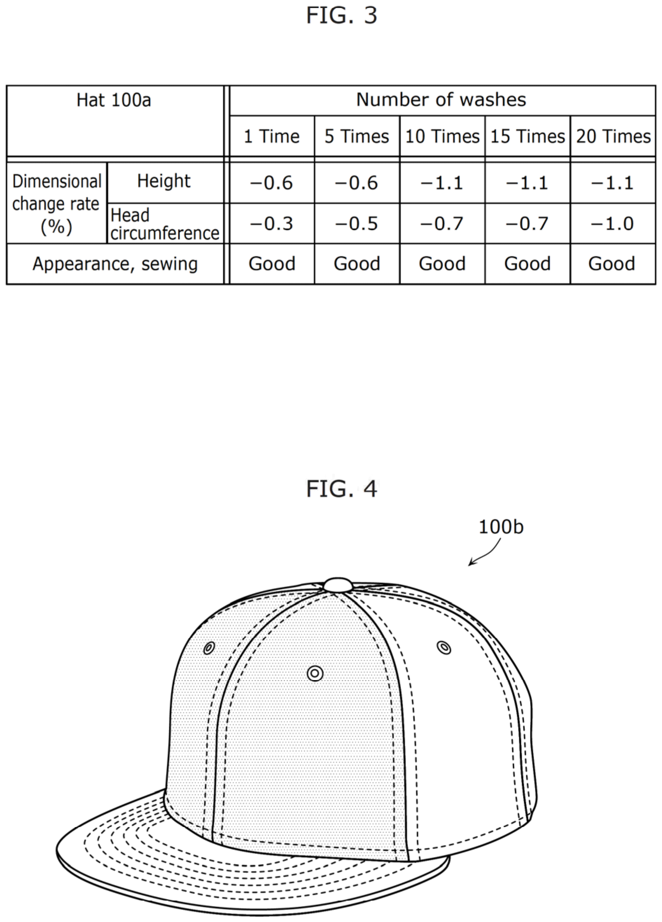

   FIG. 3 illustrates the wash resistance of a hat according to an embodiment of the present disclosure.
**[****FIG. 4****]**
   FIG. 4 illustrates another example of the shape of a hat according to an embodiment of the present disclosure.

### Description of Embodiment(s)

### Embodiment

Hereinafter, one or more embodiments of the hat according to the present disclosure will be described in detail with reference to the drawings. Each embodiment described below illustrates a specific example of the present disclosure. The numerical values, elements, the arrangement of the elements, steps, order of the steps, etc., shown in each of the following one or more embodiments are mere examples, and therefore do not limit the scope of the present disclosure. Accordingly, among the elements in each of the following one or more embodiments, those not recited in any of the independent claims are described as optional elements of a preferred embodiment.

Note that the drawings are represented schematically and are not necessarily precise illustrations. In the figures, the same reference signs are used for elements that are essentially the same. Accordingly, duplicate description may be omitted or simplified.

### [Overall Structure]

First, the structure of the hat according to the present embodiment of will described with reference to FIG. 1 and FIG. 2. FIG. 1 illustrates the structure of hat 100 according to the embodiment. FIG. 2 illustrates a bottom view of hat 100 according to the embodiment.

As illustrated in FIG. 1, hat 100 includes front panel portion 10, rear portion 20, and brim portion 30. More specifically, hat 100 includes front panel portion 10 and rear portion 20 which form the crown, and brim portion 30. In hat 100 illustrated in FIG. 1, brim portion 30 is provided at the lower end of front panel portion 10 of the crown.

The crown refers to the dome portion of hat 100, that is, the entirety of the portion that covers the top portion of the head. Here, the crown is not limited to any particular shape.

The crown includes front panel portion 10 and rear portion 20. Front panel portion 10 is the front face of the crown, and rear portion 20 is the side and rear faces of the crown, constituting the part of the crown other than front panel portion 10. Front panel portion 10 includes two pieces of fabric, right-front panel portion 11 and left-front panel portion 12. Rear portion 20 includes four pieces of fabric, but may include a plurality of pieces of fabric or may be a single piece of fabric.

As illustrated in FIG. 2, the crown of hat 100 includes six pieces of fabric: one right-front panel portion 11, one left-front panel portion 12, and four rear portions 20. Of these six pieces of fabric, two pieces, namely right-front panel portion 11 and left-front panel portion 12, include a relatively hard core material called a front interlining, and the shape of hat 100 is maintained by this core material. Note that the front interlining of front panel portion 10 may be realized by two front interlinings, namely a front interlining included in right-front panel portion 11 and a front interlining included in left-front panel portion 12, or may be realized by a single front interlining formed in the overall shape of front panel portion 10.

Next, the structure of the fabric of front panel portion 10 will be described. As illustrated in FIG. 1, front panel portion 10 is formed by overlapping four layers of fabric: outer fabric 40, interlining 50, adhesive fabric 60, and film 70. Stated differently, front panel portion 10 of the crown includes outer fabric 40 that forms the outer face of the crown, interlining 50 overlapping outer fabric 40 on the inner face of outer fabric 40, and film 70 bonded to interlining 50 on the inner face of interlining 50 by adhesive fabric 60.

Outer fabric 40 is a fabric that constitutes the outer face of hat 100. Outer fabric 40 is made of a plant-based material such as cotton, wool, or hemp, or chemical fibers such as polyester. Outer fabric 40 may, for example, be felt fabric or knit fabric. Here, the material of outer fabric 40 is not limited. Outer fabric 40 may be a single piece of fabric or may include a plurality of pieces of fabric.

Interlining 50 is a core material for maintaining the shape of the crown of hat 100. Interlining 50 is included in the front interlining of hat 100. Interlining 50 is realized by a relatively hard, stretchable material. Interlining 50 is formed, for example, from polyester, polyurethane, nylon, rayon, polyamide, or cupro, or from a composite material of two or more of these.

Glue is pre-applied on one side of interlining 50. Stated differently, interlining 50 includes an adhesive layer on one side. The adhesive layer is used to bond interlining 50 and outer fabric 40. For example, outer fabric 40 and interlining 50 are bonded by heat-press bonding. As a result, interlining 50 overlaps outer fabric 40 on the inner face of outer fabric 40. Interlining 50 may also be bonded to outer fabric 40 after being bonded to film 70 by adhesive fabric 60.

The fact that interlining 50 is stretchable contributes to reducing discomfort experienced by the user when wearing hat 100. Furthermore, because interlining 50 is stretchable, it can accommodate the agitating rotational motion applied during the machine washing of hat 100 and the centrifugal force, etc., applied during spin-drying.

Adhesive fabric 60 is a fabric that bonds interlining 50 and film 70. Adhesive fabric 60 is included in the front interlining of hat 100. Adhesive fabric 60 is, for example, realized by a glue sheet. The glue sheet is, for example, glue formed in a net-like pattern. The glue sheet is a solid at room temperature and becomes adhesive when heated.

Film 70 is a stretchable fabric. Film 70 is included in the front interlining of hat 100. Film 70 is bonded to interlining 50, and when interlining 50 is deformed, the elastic force derived from the stretchability of film 70 attempts to restore the shape of interlining 50 to its original state. The shape of interlining 50 can thus be inhibited from changing.

Film 70 is formed from, for example, polyurethane. Film 70 may be formed by adhering two layers of stretchable sheets together, for example. More specifically, film 70 may be formed of a sheet that is stretchable in the vertical direction and a sheet that is stretchable in the horizontal direction. With this configuration, film 70 can exhibit high stretchability in various directions.

Interlining 50 and film 70 are bonded by adhesive fabric 60. More specifically, interlining 50 and film 70 are bonded by heat-press bonding with adhesive fabric 60 interposed between them. Heat-press bonding is performed, for example, by applying a pressure of 0.04 MPa for 3.5 seconds at a temperature of 130°C.

By being heat-press bonded in this manner, interlining 50 and film 70 are bonded by adhesive fabric 60, and interlining 50 and film 70 are gaplessly bonded across their entire surfaces.

This allows the elastic force derived from the stretchability of film 70 to be efficiently transmitted to interlining 50. This contributes to interlining 50 not collapsing even when subjected to repeated washing. Stated differently, hat 100 contributes to making loss of shape less likely even when subjected to repeated washing.

By bonding the entire surface with the sheet-shaped adhesive fabric 60, the peeling of interlining 50 and film 70 can be inhibited when subjected to repeated washing. Stated differently, this contributes to the improvement of the wash resistance of hat 100, making it possible to use hat 100 for a long period.

Rear portion 20 may be formed by fabric of the same material as outer fabric 40, or may be formed by other fabric such as mesh fabric, etc.

Brim portion 30 refers to the part that extends forward from the lower end of front panel portion 10 of the crown of hat 100. Brim portion 30 refers to the part also known as the visor of hat 100. Here, the shape of brim portion 30 is not limited.

Brim portion 30 can maintain its shape by including a hard core material therein. The core material of brim portion 30 is formed into the shape of brim portion 30. The core material included in brim portion 30 may be of the same material as interlining 50. Brim portion 30 does not contact the wearer's head, so the material of the core material included in brim portion 30 has little effect on the feel of wearing hat 100. The core material included in brim portion 30 may therefore be a material that is harder and more durable than interlining 50, and for example may be plastic.

### [Wash Resistance]

Hat 100 according to the embodiment has a high wash resistance. Hereinafter, data showing the wash resistance of hat 100 according to the embodiment will be described. FIG. 3 illustrates the wash resistance of hat 100a according to the embodiment.

Hat 100a is an example of the above-described hat 100 according to the embodiment. Front panel portion 10 of the crown of hat 100a includes outer fabric 40 that forms the outer face of the crown, interlining 50, adhesive fabric 60, and film 70. Outer fabric 40 of hat 100a is made of 100% polyester fabric.

FIG. 3 illustrates the results of a test conducted according to the procedure specified in JIS L 1930 "Domestic wash test method for fiber products" for hat 100a. The test was performed by washing with synthetic detergent and drying by net and hanging.

This test shows the dimensional change rate (%) and the changes in appearance and sewing condition when repeatedly washed in a washing machine according to the procedure specified in this test method, after washing once, five times, ten times, fifteen times, and twenty times. Changes in appearance and sewing condition are confirmed by visual inspection by an examiner after washing by the washing machine and drying.

As illustrated in FIG. 3, the dimensional change rate in the height direction of hat 100a is -0.6% after one wash, -0.6% after five washes, -1.1% after ten washes, -1.1% after fifteen washes, and -1.1% after twenty washes. Note that normally, a dimensional change rate of 3% or greater is judged as failing.

As this shows, the dimensional change rate in the height direction of hat 100a does not significantly change even when the number of washes increases.

As illustrated in FIG. 3, the dimensional change rate in the head circumference direction of hat 100a is -0.3% after one wash, -0.5% after five washes, -0.7% after ten washes, -0.7% after fifteen washes, and -1.0% after twenty washes.

As this shows, the dimensional change rate in the head circumference direction of hat 100a does not significantly change even when the number of washes increases.

Here, with a conventional hat, that is, a hat in which film 70 is not bonded to interlining 50 by adhesive fabric 60, at five washes, the shape of front panel portion 10 begins to distort, at ten washes, wrinkles increase, and at twenty washes, the hat as a whole deforms to the extent that wearing becomes impossible due to wrinkles.

Accordingly, hat 100a is characterized in that it inhibits loss of shape even after repeated washing in a washing machine more so than a conventional hat. Stated differently, hat 100a has a high wash resistance.

Moreover, as FIG. 3 shows, the appearance and sewing condition of hat 100a are "good" even after 20 washes. Thus, even after repeated washing in a washing machine, no visual degradation in the appearance or sewing condition of hat 100a could be confirmed. Stated differently, this demonstrates that hat 100a has a high wash resistance.

### [Other Hats]

The shape of hat 100 according to the embodiment is not limited to the shape illustrated in FIG. 1.

For example, hat 100 may conceivably have the following shapes. FIG. 4 illustrates another example of the shape of hat 100 according to the embodiment.

As illustrated in FIG. 4, hat 100b is a cap including a flat brim portion 30.

Even with hat 100b illustrated in FIG. 4, by using a front interlining of front panel portion 10 of the crown in which interlining 50 and film 70 are pressure bonded, a hat is realized in which loss of shape less likely even after washing.

Hat 100 may be a peaked cap or a tall-crowned hat or the like. Hat 100 can inhibit loss of shape of the front panel portion of hat 100 when washed by using a front panel portion in which interlining 50 and film 70 have been pressure bonded. By using a fabric in which interlining 50 and film 70 have been pressure bonded to form the shape of a peaked cap or tall-crowned hat or the like in order to maintain its shape, it is possible to inhibit loss of this shape even when such a peaked cap or a tall-crowned hat is washed.

The crown of hat 100 may include a lining. For example, the lining of the crown is made of plant-based materials such as cotton, wool, or hemp, or chemical fibers such as polyester. The lining of the crown may be a mesh fabric, for example. In addition to outer fabric 40, interlining 50, adhesive fabric 60, and film 70, front panel portion 10 may include, for example, another layer such as a lining.

### [Advantageous Effects, etc.]

Examples of techniques derived from the disclosed subject matter of the present specification are as follows. The following techniques derived from the disclosed subject matter of the present specification will be described along with the advantageous effects, etc., they achieve.

Technique 1 is hat 100 in which brim portion 30 is provided at a lower end of front panel portion 10 of a crown. Front panel portion 10 of the crown includes: outer fabric 40 forming an outer face of the crown; interlining 50 overlapping outer fabric 40 on an inner face of outer fabric 40; and film 70 that is stretchable and bonded to interlining 50 over an entirety of an inner face of interlining 50.

Hat 100 having such a configuration can inhibit a change in shape and peeling of the core material even after repeated washing by using a front interlining for front panel portion 10 in which interlining 50 and stretchable film 70 have been bonded. Such hat 100 inhibits loss of shape not only due to hand washing but also due to machine washing. Stated differently, hat 100 having such a configuration inhibits loss of shape due to washing.

Technique 2 is hat 100 according to Technique 1, wherein interlining 50 and film 70 are heat-press bonded with adhesive fabric 60 interposed therebetween.

Hat 100 having such a configuration can effectively transmit the elastic force derived from the stretchability of film 70 to interlining 50 since adhesive fabric 60 can gaplessly bond interlining 50 and film 70 over the entire overlapping surface thereof. Accordingly, even after repeated washing, hat 100 having such a configuration inhibits interlining 50 from collapsing, and thus inhibits the shape of interlining 50 from changing. Such hat 100 also inhibits interlining 50 and film 70 from peeling apart.

Technique 3 is Hat 100 according to Technique 1 or 2, wherein interlining 50 is stretchable.

Because interlining 50 is stretchable, it can accommodate the agitating rotational motion applied during the machine washing of hat 100 having such a configuration and the centrifugal force, etc., applied during spin-drying. Therefore, such hat 100 inhibits loss of shape not only due to hand washing but also due to machine washing.

### (Other Embodiments)

Although the present disclosure has been described by way of one or more embodiments, the present disclosure is not limited to these one or more embodiments. Embodiments arrived at by a person skilled in the art making various modifications to any one of the embodiments, or embodiments realized by arbitrarily combining elements and functions in the embodiments which do not depart from the essence of the present disclosure are also included in the present disclosure.

### Industrial Applicability

The present disclosure is applicable to hats that require shape retention.

### Reference Signs List

- 100, 100a, 100b: hat
- 10: front panel portion
- 11: right-front panel portion
- 12: left-front panel portion
- 20: rear portion
- 30: brim portion
- 40: outer fabric
- 50: interlining
- 60: adhesive fabric
- 70: film

## Claims

1. A hat in which a brim portion is provided at a lower end of a front panel portion of a crown, wherein
the front panel portion of the crown includes:
an outer fabric forming an outer face of the crown;
an interlining overlapping the outer fabric on an inner face of the outer fabric; and
a film that is stretchable and bonded to the interlining over an entirety of an inner face of the interlining.

2. The hat according to claim 1, wherein
the interlining and the film are gaplessly bonded with an adhesive fabric interposed therebetween.

3. The hat according to claim 1 or 2, wherein
the interlining is stretchable.
